# EUROPEAN PATENT APPLICATION

(11) **EP 1 345 132 A1**
(43) Date of publication of application: **17.09.2003**
(21) Application number: 02354046.1
(22) Date of filing: 14.03.2002
(51) Int. Cl.: G06F 17/30

(54) **Process for storing and retrieving a document within a knowledge base of documents**

(71) Applicant: Hewlett-Packard Company, Palo Alto, CA 94304 (US)
(72) Inventor: Delic, Kemal, 38000 Grenoble (FR); Douillet, Laurent, 38650 St. Martin de la Cluze (FR)
(74) Representative: Lloyd, Richard Graham

(57) **Abstract**

Process for storing and retrieving a document in a repository being indexed by a search engine, said process involving the steps of:
- applying to each document a first classification based on the profile of a user who is likely to access to the repository;
- applying a query formulated by said user to said search engine for the purpose of producing a list of references of documents;
- reducing said list of references by eliminating from said lists the documents and references which do not correspond to the user's profile;
- displaying said reduced list to said user.

Preferably, a second level of classification is being performed which is representative of the particular nature of the problem to which said document refers. Automatic tagging and labeling mechanisms are provided for the purpose of improving the partitioning of the repository.

## Description

### Technical field of the invention

The invention relates to Information Retrieval (IR) techniques and more particularly to processes, and related computer programs, for storing and retrieving a document within a knowledge base or repository.

### Background art

The progress of Information Technology and the development of computer systems has allowed the creation of very large knowledge bases containing thousands of documents and electronic files. Computers are used for collecting, storing, sorting and quickly retrieving references to documents contained within such repositories. The exploitation of such repositories has commonly been based on the use of indexing techniques that allow keyword-based searches for the retrieval of the documents upon request. By formulating a query based on a given set of keywords, a search engine generally provides a ranked output list of documents.

IR techniques have been employed in a wide variety of situations where a user needs precise and quick access to reference documents. One example of such a situation is helpdesk or hotline services which are organised for providing quick and effective technical support to customers of computer and other products. Indeed, the daily work of help-desk analysts providing such services is often supported by sophisticated IT systems containing tens of thousands of problem solving documents for all aspects of the products concerned. Upon a problem being raised by a customer, a helpdesk analyst has to examine the problem and provide a quick solution meeting the particular concern of the customer. To achieve this, the helpdesk analyst often abstracts the problem into a few keywords. However, IR techniques based on key word searches usually return, by far, too many documents and only a few of the listed documents turn out to be of any real use to the helpdesk analysts - a factor that what inevitably jeopardises the effectiveness of the services which are rendered to the customer. In most cases, first line agents of the helpdesk services have very little time for finding an effective and practical solution to a single customer's problem, and the use of the traditional techniques based on keyword searches provides too much noise and returns too many documents to be easily exploited by the first level helpdesk staff.

Moreover, the handling of the references and documents that are retrieved by the traditional keyword-based search techniques requires professional skill and wide experience from the technicians in order to recognise, among the number of references being cited, a particular document which could be useful for solving the customer's problem. The need for such experience and professional skill is a further difficulty for the development of help-desk services which are notorious for being subject to a large turn-over of staff.

Therefore, it can be seen that in the area of helpdesk services, there is a particular need for improving searching techniques in order to enhance the relevance of the documents and references which are retrieved from a document repository.

However, whilst the techniques to be described below are particularly suited to this area, they nevertheless address the general problem to improve the access to the collection of documents which are stored within a database. Therefore application of the techniques in other areas is not excluded.

Finally, because there are an increasing number of situations where document repositories need to be continuously updated, it is highly desirable that the update of the repository by the introduction of additional documents be automatically processed without the need of any manual intervention nor inspection of the documents concerned by any human being.

### Summary of the invention

It is an object of the present invention to provide an improved Information Retrieval technique, suitable for use in for instance an enhanced tool for a helpdesk or hotline service, so as to improve the relevance of the documents and references which are retrieved by a search engine.

In general terms, this object is achieved by a process for storing and retrieving a document in a repository that is indexed by a search engine, said process comprising the steps of:
- applying to each document a first classification based on the profile of a user who is likely to access the repository;
- applying a query formulated by said user to said search engine for the purpose of producing a list of references of documents;
- reducing said list of references by eliminating from said list references which do not correspond to the user's profile;
- displaying said reduced list to said user.

Preferably, the repository is a repository of problem solving documents and further involving a second level of classification which is representative of the particular nature of the problem to which said document refers. This permits an effective partitioning of the repository to be introduced which can be used for improving the relevance of cited references in a retrieval process.

In one embodiment, the first level of classification is based on counting of the number of words, the number of lines and the number of operating steps for the purpose of determining whether the document might comprises an immediate prescription for solving the problem and, in response to said determination, assigning a first category (FIX) to said document.

In one particularly preferred embodiment, the first level classification is also based on a comparison of the words contained within the document with words extracted from a dictionary for the purpose of determining the number of concepts addressed by said documents.

Preferably, the first level of classification results in a 3-tag labeling, comprising:
a FIX tag assigned to document describing immediate action to be exerted by the user;
a STEPNOTE tag assigned to a document determined as describing a short sequence of operating steps for solving a problem;
a TECHNOTE tag assigned to a document determined as describing background technical description of a problem.

The first level of classification can be complemented by a second level of classification which improves the partitioning of the repository of documents. The second level classification is based on the definition of K predetermined classes, each class being defined by a set of n keywords.

In one preferred embodiment, each document is assigned at least one class by means of an automatic process involving the steps of:
- applying for each class a query based on a set of keywords extracted from a class definition file, said query being applied to said search engine;
- producing a number of K lists of results, each list corresponding to one given class;
- comparing for each document of said repository the particular ranking which is received in the said K lists;
- determining the particular list among said K lists for which said document receives the higher ranking and correspondingly assign the class corresponding to said particular list as the first class.

Preferably, each document is also assigned a second and a third class as a result of said comparison.

The invention is particular adapted to the arrangement of a helpdesk service - such as those known in the software and computing area - for the purpose of providing well profiled list of references and documents for different staff such as first level agents, technicians and experts.

The combination of the keyword search with the contextual analysis of the output list permits to reduce the list of irrelevant documents being retrieved from the search process and, greatly improves the ranking of the relevant documents since the most relevant ones will be located closer the top of the list of output references.

Other aspects of the invention provide associated separate methods for storing in and retrieving documents from the repository and computer program products comprising program code elements for carrying out the above-described methods.

### Description of the drawings

An embodiment of the invention will now be described, by the way of example only, with reference to the accompanying drawings, wherein:
Figures 1 and 2 illustrate the two levels of organization of a repository of documents.
Figure 3 is a flow chart detailing a first level of classification involving the categorization of the documents stored within a repository.
Figure 4 is a flow chart illustrating a second level of classification based on an automatic assignment of the problem classes to the documents.
Figure 5 is a flow chart illustrating a contextual retrieval process of the documents and references stored within a repository.

### Description of the preferred embodiment of the invention

There will now be described in detail how an Information Retrieval (IR) process can be arranged which permits quick and effective retrieval of references and documents gathered within a repository of documents. While the process can be used with any kind of document repository or any type of knowledge base, the preferred embodiment will be more particularly described with reference to the arrangement of a repository of problem solving documents which are drafted to provide guidance, and immediate remedial action, to problems arising in the use of computers - including hardware and software problems. As will be understood from the following description, the processes described are be particularly suited for the design of a helpdesk tool which is used by helpdesk staff and analysts for providing quick and effective solution to the helpdesk customers.

The IR process which is herein described is based on the use of a repository of documents which are indexed using a conventional index creating engine, but enriched with the incorporation of contextual labels or tags automatically computed and applied to the different documents contained within the repository.

Each document incorporated within the repository is classified in accordance with a two level classification. A first level of classification is directed to the way the document or reference will be used and the role of the user that will access the reference from the repository. This first level of classification permits the documents and references providing direct guidance and operating instructions for a direct solution to a given problem to be distinguished from, for instance, documents which only provide general knowledge and background information relating to a given problem. The latter type of documents generally require deeper insight and reflection on the part of the user accessing the repository and are identified as such by the information retrieval process.

In the preferred embodiment, three different categories are defined: FIX representing documents providing direct and immediate solutions such as those provided by the different wizards which are available in the WINDOWS™ operating systems; STEP NOTE which is a label/tag assigned to documents which provide step-by-step direct solutions to particular problems. The last category which is defined is TECH NOTE: it is applied to documents providing background document relating to a problem, perhaps including drawings, and which require deeper insight from the reader.

In addition to the first level of classification - the categorization mentioned above - the preferred embodiment employs a second level of classification which is automatically applied to the knowledge base and which is directed to the particular context of the document. The second level of classification concerns the domain to which the particular problem pertains and permits the partitioning of the whole knowledge base into a set of n predetermined imposed classes. In the example of a helpdesk tool for computer systems, the classes could for instance be *"Install', "boot"*, "login/*connection*", etc.... and followed by a *"general"* class.

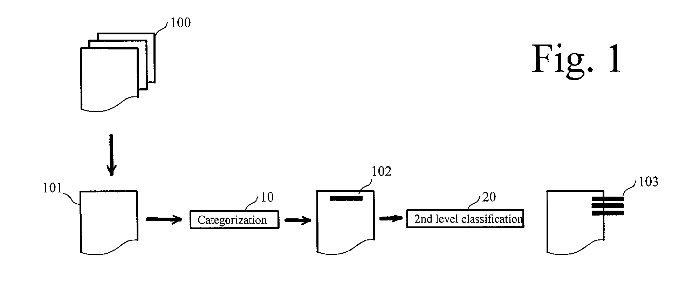

Figure 1 more particularly illustrates the two levels of classification which are performed in the preferred embodiment. There is illustrated an example of a repository of documents 100 which is arranged on the basis of a first category tag or label, and three different class tags or labels. For this purpose, repository 100 is automatically analysed by the process to be described in detail hereinafter, and each individual document - such as document 101 - is subjected to a categorization step 10 which provides a first label/tag defining one of the categories 102 (FIX, STEPNOTE, TECHNOTE) which is assigned to the particular document. A further step of classification - represented by a step 20 in figure 1 - permits a second level of classification, based on the assignment of three distinct ordered classes 103 from a set of n different classes.

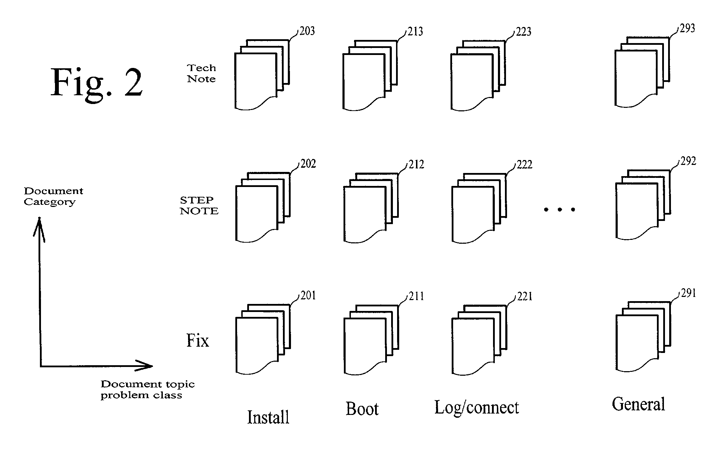

By introducing document categories - such as categories FIX, STEPNOTE and TECHNOTE - and problem class labels - such as classes "install" , "boot", "login/connect", and general etc.... , such as illustrated in figure 2, there is achieved a precise partitioning of the repository of documents. More particularly, the FIX category label permits the gathering of documents belonging to a first class 201 (Install), to a second class 211 (Boot), to a third class 221 (login/connect), etc... up to a nth class 291 (general). Similarly, the STEP NOTE category permits the gathering of documents of the first class 202, to the second class 212, to the third class 222, to class 292 etc.... The TECH NOTE category permits the gathering of documents belonging to classes 203, 213, 223, ... 293 etc...

The process which is hereafter described provides for automatic classification, in the two different levels categories and classes - for any new document which is incorporated within the repository. While each document is assigned one and only one category, it may however receive up to three classes including, in some cases, no class at all. The dual organization is particularly effective where the repository of documents will be subject to a contextual searching process for the purpose of drastically reducing the number of documents and references retrieved by a search engine. In one embodiment, each document is assigned a category that is representative of the amount of technical information contained within the document and the level of technical knowledge required from the potential reader and how immediately they can derive a practical solution from said document.

The categorization of each document is based on an automatic mechanism permitting a single tag or label to be assigned from among the three different tags available: a first FIX tag, a second STEPNOTE tag and a third TECHNOTE tag.

More particularly, the first, so-called, FIX tag serves to designate a document which comprises an immediate possibility of action from the user or the potential reader of said document. One example of such an immediate action is to launch a particular program or software, such as for instance, a wizard interface, similar to those known from the Windows 98 operating system marketed by Microsoft Corp.

The second so-called STEPNOTE tag serves to designate a document which comprises a short sequence of steps which are expected to solve the problem faced by the customer. Basically, the STEPNOTE tag is assigned when the document describes a very limited course of action or procedure which the user may carry out relatively quickly.

Finally, the third so-called TECHNOTE tag is assigned to a document when said document contains a relatively lengthy technical description, including, for instance, background information which the reader would have to read and understand in order to gain insight into the problem concerned. Typically, this kind of document might include a set of drawings and require a relatively long time to read and understand.

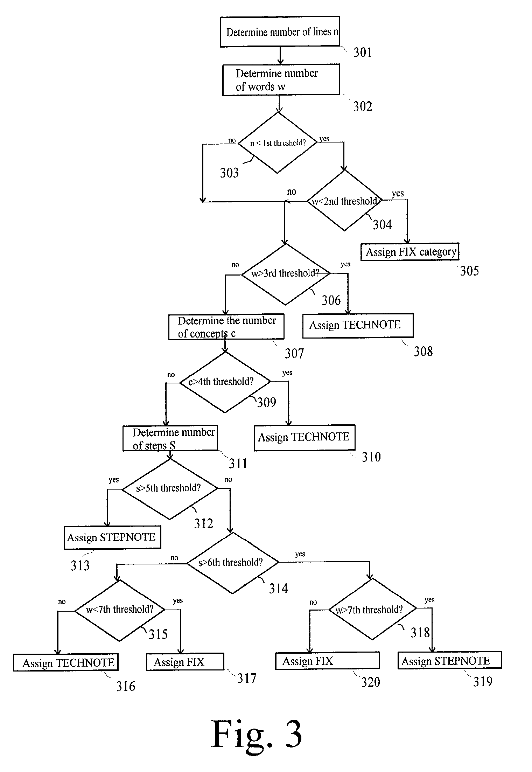

With respect to figure 3 there will now be described a basic mechanism which can be used to automatically assign the above mentioned tags. In the preferred embodiment, the process is arranged so as to be able to analyze a wide number of different documents, including the .pdf format used by the ADOBE ACROBAT™ products, the .doc format used by MICROSOFT WORD™, text files, Hyper-Text Mark-up Language (HTML) files, eXtended Mark-up Language (XML) files etc.... It will be understood that the process can be easily adapted to the processing of any other suitable files for which the format is known. The process may even involve Optical Character Recognition techniques for the purpose of producing a set of ASCII characters from a scanned image file representative of the document being processed.

The process starts with a step 301 where the number of lines n of the considered document is determined.

In a step 302, the number of words w of the document is computed.

In a step 303 the number of lines n is compared to a first threshold which, in the preferred embodiment, is set to be equal to 50. This first threshold is used for setting a minimum number of the lines.

If the number of lines n is lower than the first threshold, then the process proceeds to a step 304 where the number of words w is compared to a second threshold used for defining a minimum number of words. In the preferred embodiment, this second threshold is set to 250. If the number of the words is lower than 250, then the process proceeds to a step 305 where the category of the document is set to be FIX.

If both the tests of steps 303 and 304 fail, then the process proceeds to a step 306 where the number of words w of the documents is compared to a third threshold defining a maximum number of words which can be, for instance, set to 700 words.

If the comparison step 306 succeeds then the process goes to a step 308 where the document is categorized as being a TECHNOTE.

If, on the contrary, the number of words w of the document is lower than the third threshold, then the process proceeds to a step 307 where the number of concepts c being addressed by the document is computed. The number of concepts is determined with reference to a dictionary of a particular set of words referring to aspects identified as corresponding to important aspects of a problem. In the preferred embodiment, some statistical and empirical heuristics are used based on the number of occurrences of such words in order to permit a decision process determining whether the concept corresponding to the words concerned is effectively perceived within the document.

In a step 309, the process compares the computed value c with a fourth threshold, for instance a number fixed to 5. If the test succeeds, then the process proceeds to a step 310 where the document is assigned the category TECHNOTE.

Conversely, if the number of concepts is lower than the fourth threshold, then the process proceeds to a step 311 where the number of steps S involved in the corresponding document is computed. The determination of the number of steps is performed by an analysis of keywords such as "step n", "action" and pattern such as "1/", "2)", "III.",etc... Clearly, there are many suitable techniques that might be used for determining the number of steps to which a process refers.

The process is then followed by a step 312 where the number of steps S described in the document is compared to a fifth threshold, for instance 6.

If the test of step 312 reveals that the number of steps S is higher than the fifth threshold, then the process proceeds to a step 313 where the document is categorized as a STEPNOTE document.

If the test of step 312 shows that the number of steps S is lower than the fifth threshold, than the same number s is compared in a step 314 to a sixth threshold that is lower than the fifth threshold. In one embodiment, the sixth threshold value is set to be equal to 2. If S is lower than the sixth threshold, then the process proceeds to a step 315 where the number w of words of the document is compared with a seventh threshold. If the number w is lower than the seventh threshold, then the process proceeds to a step 317 where the document is categorized as being FIX. Conversely, the process proceeds from step 315 to a step 316 where the document is categorized as a TECHNOTE.

If the number of steps S is higher than the sixth threshold, then the process proceeds from step 314 to a step 318 where the number w of words of the documents is again compared with said seventh threshold. If the number w is lower than the latter, then the process proceeds to a step 320 where the document is categorized as being FIX. Conversely, the process proceeds from step 318 to a step 319 where the document is categorized as a STEPNOTE.

It should be noticed that the values which are given above are only given for illustrative purposes and that they can of course be optimised or adapted to any particular application.

The determination of the number of lines, the computing of the number of words and the consideration of the number of concept permits, in addition to the identification of the number of steps, a precise categorization of the whole repository of documents.

It can be seen from the developments above, that the first level of classification is directed to the way the user/customer - or the helpdesk staff in the case of a repository arranged for a helpdesk service - can use the documents. Such automatic categorization permits the documents to be tagged in the three distinctive, mutually exclusive, labels: FIX, STEPNOTE and TECHNOTE.

In the preferred embodiment, once the first level of classification has been completed, a second level of classification is executed. Basically, the aim of the second classification is to enhance the partitioning process of the repository of document, based on a class division. For this purpose, a number of K classes are defined and a subset of these classes - preferably a first class, a second class and a third class - are assigned to each document within the repository. While the number of classes which can be used for this purpose can vary to a large extent in accordance with the application concerned, in the preferred embodiment, the number of classes is fixed at seven classes, thus providing seven relatively wide problem domains to which the help-desk analyst will have to refer. The rationale for this is that, in short term human memory, a number of seven or eight (maximum ten) classes can be easily remembered and this substantially facilitates the use of the process by first level agents of the helpdesk service.

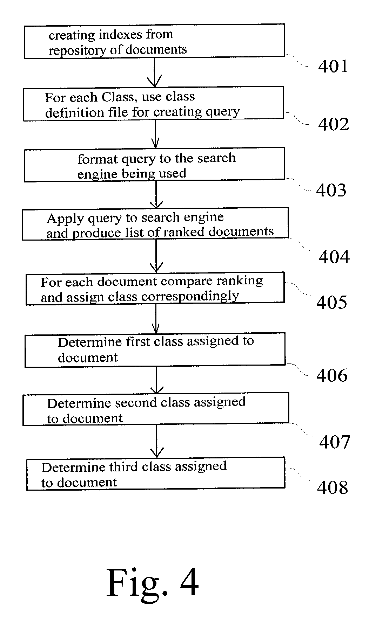

With the number of classes defining the different domains to which the different documents may relate, the process which will be described now with reference to figure 4 provides, again, an automatic classification of every document.

In a step 401, the process analyses each document for the purpose of generating a list of indexes. Any suitable indexing method or software program can be used for the purpose of generating the list of indexes used to describe the knowledge base. The creation of an index is not part of the present invention and many known techniques can be used for providing a set of indexes from a collection documents and electronic references. Many software programs are known for providing such result and the process described here may be straightforwardly adapted to whatever particular index creating software is used.

Optionally and in parallel with the step 401, the process computes a list of keywords which will be listed for the purpose of providing a set of description words which are provided to a set of human experts. Indeed, those experts are asked to inspect several hundreds of help-desk documents and to extract keywords which they think are representative of the eight predefined (imposed) problem classes. For the purpose of facilitating this exercise, a set of keywords are automatically computed including elimination of higher and lower frequencies keywords. In helpdesk example in the field of computing, the following classes are used, for instance:
Install,
Boot,
Login/connect,
Print,
Usage,
Startup,
Error,
General.

Such domain or class definitions are only given for the sake of illustration. Clearly they can be adapted in accordance with the application being considered.

For each class being considered, a list of keywords is generated and stored within a file. Each keyword is chosen in such a way so as to be representative of one aspect of the class definition. In addition, the keywords extracted from the list of indexes showing extreme frequencies of occurrence and clearly disregarded. Each domain or class is thus assigned a list of keywords which is stored within a corresponding file. Preferably, the process can include an automatic computation of a set of keywords from the repository document for the purpose of facilitating the definition of keywords included within each class file. In one embodiment, the class or domain files are TEXT files or files complying with the eXtended Mark-up Language (XML) standards. This set of words are used for the purpose of elaborating a set of n description lists which contains lists of keywords arranged to describe each particular class being considered. In one embodiment, if the class is dedicated to refer to "install" problems, the following list of keywords could, for instance be predefined and then stored within a corresponding class definition file.

In the following, there is provided an illustrative file showing the definition of the INSTALL class:
configuration
configuration<in>title
masters
update
upgrade
upgrade<in>title
#"load"
load<in>title
#"loading"
#"loader"
#control+panel
#file+manager
install <in>title
install
README.TXT
installation
reinstall
reinstall <in> title
setup
setup<in> title
uninstall <in>title

After the completion of the search engine index, and when the K class definition files are available within the computer system, the process proceeds to a step 402 for the purpose of generating, for each class, a query which is then formatted, in a step 403, for the particular search engine being considered.

In a step 404, the process launches the formatted query in the search engine being used and the latter produces a list of ranked documents corresponding to the particular class which is considered.

The process performs again the same process for each of the K classes which were imposed and, the result is a set of K lists of ranked documents, with each list corresponding to one associated class.

In a step 405, the process then compares, for each document, the particular ranking which has been assigned to the document in each of the K lists. In a step 406, the process determines the particular lists among the K lists of outputs for which the given document shows the highest rank and correspondingly assigns the class corresponding to this list as being the first class.

In a step 407, the process determines the list showing the second highest ranking and correspondingly identifies the second class assigned to this document.

In a step 408, the process determines the third class assigned to the document by identifying the list in which said document has the third highest ranking.

In a preferred embodiment, the process may be complemented with statistical analysis in order to eliminate, for one document, a list of results in which the document has too low a ranking even although that particular ranking may be the highest one for the document concerned. (This is illustrative of the case where a document is ranked low for all given classes is eliminated as a consequence)

When the step 408 has been completed, the repository will contain documents which have been assigned first, second and third classes without requiring a manual operation from the user. The second-level classification is thus , as was the first-level classification, completely automatic - a substantial advantage over known techniques that require manual classifying operations involving higher costs and effort. Once the K lists of keywords have been defined, the whole repository of documents can be easily classified. The classification of each additional document which is incorporated within the repository only requires the processing of K queries and the comparison steps described above.

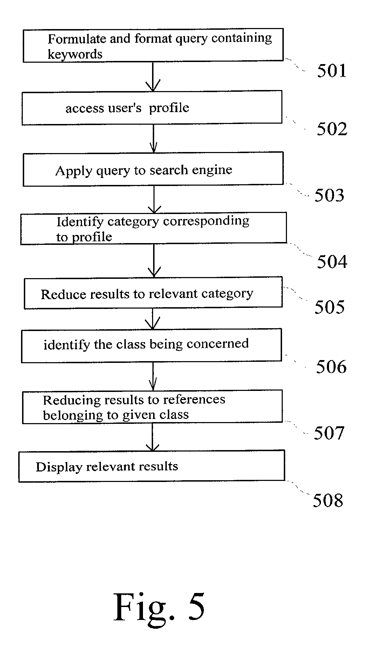

The repository which is classified in accordance with the process defined above is easy to exploit to implement an effective Information Retrieval system. Since each document of the repository is precisely classified, by document category - such as categories FIX, FIXSTEP and STEP NOTE - and by problem class - such as classes "install" , "boot", "login/connect", and general etc...., the relevance of the documents which can be retrieved by the search engine can be improved. In particular, the first level agents of the helpdesk staff can be provided with the most useful documents and references providing immediate guidance which they can in turn provide to their customers. On the other hand, the same repository of documents is also useful for experienced and skilled technicians since they can access to a wide number of references, including long, technical notes. By introducing document category and problem class labels, the search space is reduced and the grouping of the documents into problem definition classes improved. Consequently, as will be seen below in the searching process described with reference to figure 5, if the type of help-desk agent and the problem domain are known, a *contextual* search process can be achieved and the results being obtained, as well as the number of relevant documents being returned to the agent are substantially improved.

With respect to figure 5 there will now be described the contextual search process for information retrieval of a document within the repository of documents generated using the above described processes.

In a step 501, a query corresponding to the particular description of the problem which the agent wishes to handle is defined. The query is then formatted to fit the search engine.

In a step 502, the process accesses a user profile containing information representative of the user and, particularly, specifying whether the user is a first line agent, a technician or an expert in the particular area being considered.

In a step 503, the query is applied to the search engine, which generates and retrieves a list of documents corresponding to the query.

In a step 504, the process identifies the category which is corresponds to the user's profile determined in step 502.

In a step 505, the process reduces the number of documents being retrieved from the search engine to those tagged according to the particular user-category being considered. For the first line agent of a help-desk tool, for instance, since the latter has very little time to process the request, only the category FIX or STEPNOTE documents are considered.

In a step 506, the process then identifies the particular class(es) which is or are relevant to the query being considered. In one embodiment, this is achieved by means of a request transmitted to the help-desk agent, for instance based on a selection box of a Graphical User Interface (GUI) of the help-desk software tool allowing quick selection. In response to said selection, the process then reduces the list of documents further in a step 507.

In a step 508 the process then recomputes the ranking of the documents listed and the result is then displayed to the agent or the user. Because of the double-filtering of the list of references, the relevance of the results of the retrieving process is substantially improved and, first line agents can more easily retrieve document that provide quick and immediate action to solve the particular problem with which customer is faced.

It can be seen that the process is particularly useful in application to help desk environments where first line agents only have a few minutes to consider each question posed by the customers and to finding a practical solution for solving them. By reducing the output list of documents to the first category corresponding to the FIX documents, the first line agent can be assured to be provided a short list of documents which should in most cases fully address the problem raised by the customer by presenting an immediate, concrete solution. Since the first line agents do not have to refer to third class category documents, they are relieved from the necessity of reading long documents. For cases where the first-line agents cannot provide an immediate solution to solve the customer's problem, the issue can be passed to second-line technicians - and even third-line experts - who normally may be assigned a longer time for addressing the problem. In this case, the process permits the list of documents to be enhanced with third category document in order to provide the technicians and experts more comprehensive document concerning the particular problem being considered.

Therefore, it can be seen that the process described above is particularly well suited for the organization of help-desk services. The knowledge base is arranged and partitioned into a set of n classes which are defined with respect to the users of the repository - and then documents which can be continuously added to the repository through automatic analysis and processing in order to assign them category tags/labels and the classes. The same repository of documents can be used in a single retrieval process for the purpose of providing technical references and documents for any kind of application, such as car maintenance help-desk etc....

By introducing document categories and problem classes for each document in the repository, the number of documents returned can be reduced by sorting them into appropriate categories (in accordance with the profile of the user) and appropriate classes (in accordance with the problem being addressed). The relevance of the documents which are output by the process is therefore substantially improved. An additional advantage is the reduction of the costs for content management.

While the process the particularly described in relation with the organization of a helpdesk arranged to provide computing support and assistance, it is clear that the teaching can be straightforwardly adapted to the arrangement of any other types of helpdesk.

## Claims

1. Process for storing and retrieving a document in a repository that is indexed by a search engine, said process comprising the steps of:
- applying to each document a first classification based on the profile of a user who is likely to access the repository;
- applying a query formulated by said user to said search engine for the purpose of producing a list of references of documents;
- reducing said list of references by eliminating from said list references which do not correspond to the user's profile;
- displaying said reduced list to said user.

2. Process as claimed in claim 1 wherein the application of said first classification comprises counting of the number of words in the document for the purpose of determining whether the document contains an immediate solution to a problem and, in response to said determination, assigning a first category to said document.

3. Process as claimed in claim 1 or claim 2 wherein the application of said first classification comprises counting of the number of lines contained within said documents.

4. Process as claimed in any preceding claim wherein the application of said first classification comprises determining the number of operating steps which are described within said document.

5. Process as claimed in any preceding claim wherein the application of said first classification comprises comparing the words contained within the document with words extracted from a dictionary for the purpose of determining the number of concepts addressed by said documents.

6. Process as claimed in any preceding claim wherein said first classification results in one of three tags being associated with the document, said tags comprising:
a first tag assigned to documents describing immediate action;
a second tag assigned to documents determined as described a short sequence of operating steps;
a third tag assigned to documents determined as describing background technical description.

7. Process as claimed in any preceding claim wherein said repository is a repository of problem solving documents and further comprising applying to each document a second classification which is representative of the subject matter of the document, and reducing the number of documents listed by the search engine in accordance with said first level and said second level classification.

8. Process as claimed in claim 7 wherein said second classification is based on the definition of K predetermined classes, each class being defined by a set of n keywords.

9. Process as claimed in claim 8 wherein each document is assigned at least one class by means of an automatic process comprising the steps of:
- applying for each class a query based on a set of keywords extracted from a class definition file, said query being applied to said search engine;
- producing a number of K lists of results, each list corresponding to one given class;
- comparing for each document of said repository the particular ranking which is received in the said K lists;
- determining the particular list among said K lists in which said document receives the highest ranking and correspondingly assigning the class corresponding to said particular list as the first class.

10. Process as claimed in claim 9 wherein each document may be assigned optional second and/or third classes.

11. Process as claimed in any preceding claim adapted for the arrangement of a helpdesk software tool allowing access to the repository of document for first level agents, technicians and experts.

12. A process for storing a document in a repository that is indexed by a search engine, said process comprising the steps of:
- applying to each document a first classification based on the profile of a user who is likely to access the repository.

13. Process as claimed in claim 12 wherein the application of said first classification comprises counting of the number of words in the document for the purpose of determining whether the document contains an immediate solution to a problem and, in response to said determination, assigning a first category to said document.

14. Process as claimed in claim 12 or claim 13 wherein the application of said first classification comprises counting of the number of lines contained within said documents.

15. Process as claimed in of claims 12 to 14 wherein the application of said first classification comprises determining the number of operating steps which are described within said document.

16. Process as claimed in any of claims 12 to 15 wherein the application of said first classification comprises comparing the words contained within the document with words extracted from a dictionary for the purpose of determining the number of concepts addressed by said documents.

17. Process as claimed in any of claims 12 to 16 wherein said first classification results in one of three tags being associated with the document, said tags comprising:
a first tag assigned to documents describing immediate action;
a second tag assigned to documents determined as described a short sequence of operating steps;
a third tag assigned to documents determined as describing background technical description.

18. Process as claimed in any of claims 12 to 17 wherein said repository is a repository of problem solving documents and further comprising applying to each document a second classification which is representative of the subject matter of the document.

19. Process as claimed in claim 18 wherein said second classification is based on the definition of K predetermined classes, each class being defined by a set of n keywords.

20. Process as claimed in claim 19 wherein each document is assigned at least one class by means of an automatic process comprising the steps of:
- applying for each class a query based on a set of keywords extracted from a class definition file, said query being applied to said search engine;
- producing a number of K lists of results, each list corresponding to one given class;
- comparing for each document of said repository the particular ranking which is received in the said K lists;
- determining the particular list among said K lists in which said document receives the highest ranking and correspondingly assigning the class corresponding to said particular list as the first class.

21. Process as claimed in claim 20 wherein each document may be assigned optional second and/or third classes.

22. Process for retrieving a document from a repository that is indexed by a search engine, said process comprising the steps of:
- applying a query formulated by said user to said search engine for the purpose of producing a list of references of documents;
- reducing said list of references by eliminating from said list references which do not correspond to the user's profile;
- displaying said reduced list to said user.

23. Process as claimed in any claim 22 comprising reducing the number of documents listed by the search engine in accordance with said first level and a second level classification, the second classification being representative of the subject matter of the document.

24. A computer program product comprising program code elements for carrying out a process as claimed in any preceding claim.
